(19) Europäisches Patentamt
European Patent Office
Office européen des brevets

(11) Veröffentlichungsnummer : **0 335 917 B1**

(12) **EUROPÄISCHE PATENTSCHRIFT**

(45) Veröffentlichungstag der Patentschrift :
**19.10.94 Patentblatt 94/42**

(51) Int. Cl.$^5$ : **H04L 12/26**

(21) Anmeldenummer : **88904395.6**

(22) Anmeldetag : **19.05.88**

(86) Internationale Anmeldenummer :
**PCT/DE88/00297**

(87) Internationale Veröffentlichungsnummer :
**WO 88/10038 15.12.88 Gazette 88/27**

(54) **VERFAHREN ZUR LOKALISIERUNG DEFEKTER STATIONEN IN LOKALEN NETZWERKEN UND DAZUGEHÖRIGER SCHNITTSTELLENCONTROLLER.**

(30) Priorität : **10.06.87 DE 3719283**

(43) Veröffentlichungstag der Anmeldung :
**11.10.89 Patentblatt 89/41**

(45) Bekanntmachung des Hinweises auf die
Patenterteilung :
**19.10.94 Patentblatt 94/42**

(84) Benannte Vertragsstaaten :
**DE FR IT**

(56) Entgegenhaltungen :
**WO-A-86/01019
US-A- 4 031 375
PROCEEDINGS OF THE NATIONAL ELECTRO-
NICS CONFERENCE, Band 35, Oktober 1981,
Oak Brook, Illinois, US; G.R.LIND:
"Centralization of fault location for stored program controlled systems (SPCS)", Seiten
372-376**

(56) Entgegenhaltungen :
**ICC'84, LINKS FOR THE FUTURE, SCIENCE,
SYSTEMS, & SERVICES FOR COMMUNICA-
TIONS, Amsterdam, NL, 14.-17. MAI 1984;
Band 3, IEEE, New York, US; W.BOGHDADY et
al.: "A technique for fault-detection and performance measurement in data communications networks", Seiten 1366-1370**

(73) Patentinhaber : **ROBERT BOSCH GMBH
Postfach 30 02 20
D-70442 Stuttgart (DE)**

(72) Erfinder : **BOTZENHARDT, Wolfgang
Wangener Strasse 38
D-7320 Göppingen (DE)**
Erfinder : **DAIS, Siegfried
Bergheimer Weg 17
D-7016 Gerlingen (DE)**
Erfinder : **KIENCKE, Uwe
Reichertshalde 35
D-7140 Ludwigsburg (DE)**
Erfinder : **LITSCHEL, Martin
Schulstrasse 50
D-7143 Vaihingen/Enz 2 (DE)**
Erfinder : **UNRUH, Jan
Ontariostrasse 52
D-7000 Stuttgart 61 (DE)**

EP 0 335 917 B1

## Beschreibung

Stand der Technik

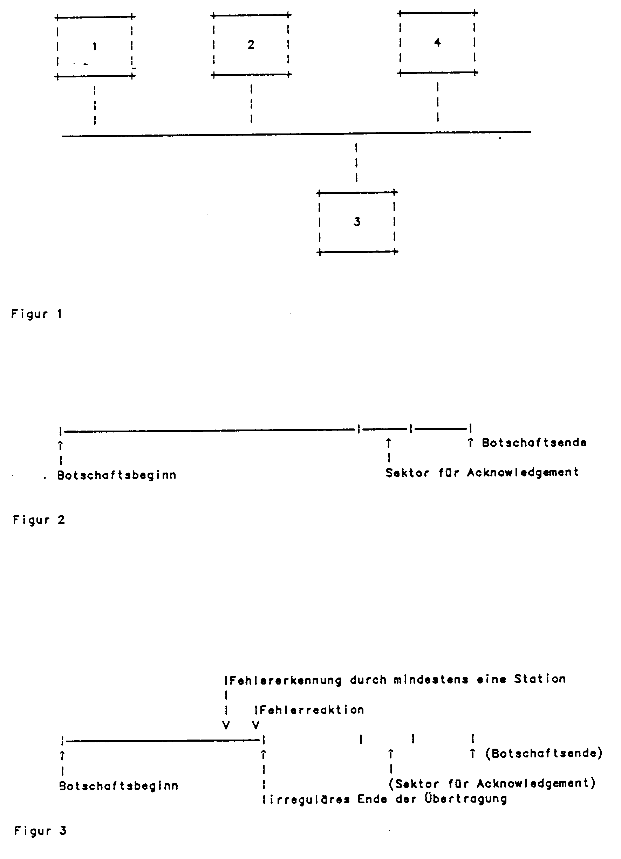

Ein lokales Netzwerk (Fig. 1) dient der Übertragung von Informationen zwischen mehreren Stationen, die über einen Bus miteinander verkoppelt sind.

Die Kommunikation findet in der Weise statt, daß Informationen von den Senderstationen codiert und als Botschaften bitseriell übertragen werden. Je nach Buskonzept kann es eine oder auch mehrere Empfängerstationen geben, die eine Botschaft entgegennehmen und die Information decodieren.

Die Art, wie die Empfänger einer Botschaft ermittelt werden, hängt wesentlich vom Buskonzept ab (SAE-Papier 830536). In manchen Systemen sind die Stationen mit Stationsadressen versehen, wobei in den Botschaften die Adressen von Sender und Empfänger als Bestandteil enthalten sind. Eine Station wird zum Empfänger einer Botschaft, wenn sie ihre Stationsadresse in der Botschaft findet. Das bedeutet aber, daß der Anwender zur Übertragung einer Botschaft die Stationsadressen anderer Stationen kennen muß.

Sollen mehrere Stationen eine Botschaft empfangen, dann muß diese Botschaft von der Senderstation mehrfach mit jeweils passenden Empfängerstationsadressen gesendet werden. In solchen Systemen müssen also Elemente der Systemkonfiguration auf der Anwendungsebene bekannt sein und verwaltet werden. Andere Systeme kennen keine Stationsadressen und die damit verbundene eingeschränkte Systemflexibilität. Bei diesen Systemen ist jede Information durch einen Identifikator eindeutig gekennzeichnet. Aufgrund des Identifikators entscheidet jede Station, ob sie die Botschaft entgegenzunehmen hat oder nicht. Dabei kann eine Botschaft von mehreren Stationen gleichzeitig empfangen werden.

Ein Beispiel für ein solches lokales Netzwerk ist das für den Einsatz in Automobilen konzipierte Controller Area Network (CAN) (SAE-Papier 860391).

Um Datensicherheit in lokalen Netzwerken zu gewährleisten, überprüfen Empfangerstationen die Korrektheit einer empfangenen Botschaft mittels Fehlersicherungsverfahren und melden der sendenden Station den korrekten oder nicht korrekten Empfang der Botschaft zurück. Eine solche Rückmeldung kann durch Quittierung der Botschaft in einem speziellen Acknowledgement-Sektor erfolgen (Fig. 2).

Es können auch spezifische Bitsequenzen als Fehlermeldung vorgesehen sein, die im Fehlerfalle von jeder Station dazu benutzt werden, eine laufende und als fehlerhaft erkannte Übertragung einer Botschaft abzubrechen und alle übrigen Stationen zu veranlassen, die Botschaft ebenfalls nicht entgegenzunehmen (Fig. 3).

Die Fähigkeit von Stationen, nicht korrekt übertragene Botschaften abzubrechen, kann zu Beeinträchtigungen bis hin zur Blockade des Busses führen, wenn von einer defekten Station im Extremfall sämtliche übertragenen Botschaften fälschlicherweise als fehlerhaft deklariert werden.

In einer solchen Situation wäre wegen des Defektes einer Station keine der übrigen Stationen mehr in der Lage. den Bus zu Kommunikationszwecken zu nutzen.

Aus der US 4 031 375 ist eine Vorrichtung zur Fehlerdiagnose in dem zentralen Schnittstellenbaustein einer programmierbaren Steuereinheit bekannt. Der zentrale Schnittstellenbaustein dient als Verbindungsknoten zwischen den verschiedenen Bausteinen der programmierbaren Steuereinheit. Er regelt den Datenverkehr in dem System. Zur Behandlung von Fehlern, die beim Datenverkehr auftreten, wird vorgeschlagen, zwei Kommunikationscontroller in dem zentralen Schnittstellenbaustein vorzusehen und bei Fehlererkennung in dem einen Kommunikationscontroller auf den anderen Kommunikationscontroller umzuschalten. Beide Kommunikationscontroller weisen den gleichen Funktionsumfang auf. Weiterhin kann eine Diagnose des fehlerhaften Kommunikationscontrollers mit Hilfe von Testprogrammen durchgeführt werden. Damit kann eine Fehlerlokalisation innerhalb des Kommunikationscontrollers erreicht werden.

Aus der WO 86/01 019 ist ein Computer-Vermittlungssystem für ein Telefonnetz bekannt. Das Vermittlungssystem besitzt eine Prozessoreinheit, die über eine Interface-Einheit mit einer Peripherie-Einheit verbunden ist. Das Vermittlungssystem ist fehlertolerant ausgelegt. Dabei sind verschiedene Subsysteme redundant vorhanden. Es sind acht alternative Datenpfade vorhanden, so daß auch bei Ausfall eines der Subsysteme die Funktion des Vermittlungssystems erhalten bleibt. Die einzelnen Subsysteme besitzen Mittel zur Fehlererkennung. Wird ein Fehler erkannt, so wird eine Fehlermeldung an die aktive Prozessoreinheit über einen separaten Übertragungskanal gesendet. In der Prozessoreinheit wird eine Diagnoseliste aufgrund des aufgetretenen Fehlers aktualisiert. In der Diagnoseliste ist für jedes Subsystem eine Angabe über die Wahrscheinlichkeit, daß gerade dieses Subsystem defekt ist, vorhanden. Aus der Liste kann dann entnommen werden, welches der Subsysteme die größte Fehlerwahrscheinlichkeit aufweist. Davon abhängig wird dann ein anderer Datenpfad ausgewählt, um die Funktion des Vermittlungssystems weiter aufrechtzuerhalten.

Es ist Aufgabe der Erfindung, für lokale Netzwerke, in denen mehrere verteilte Stationen über einen seriellen Bus miteinander verbunden sind, ein Lokalisierungsverfahren zur Entdeckung und gegebenenfalls Abschaltung defekter Stationen anzugeben, das garantiert, daß auch in ungünstigen Fällen die Kommunikation

2

zwischen den intakten Stationen zumindest eingeschränkt erhalten bleibt.

Die Systemkonfiguration insbesondere von Automobil-Netzwerken kann entsprechend dem Ausstattungsgrad der Fahrzeuge stark variieren. Eine wesentliche Forderung an Kraftfahrzeug-Netzwerke ist deshalb die Systemelastizität, die es erlaubt, Stationen hinzuzufügen oder herauszunehmen, ohne damit Änderungen bei der Steuerung der Übertragung und der Fehlerbehandlung erforderlich zu machen. Es geht darum, in einem lokalen Netzwerk eine mit der geforderten Systemelastizität verträgliche optimale Überwachung zu gewährleisten.

Vorteile der Erfindung

Das erfindungsgemäße Verfahren mit den kennzeichnenden Merkmalen des Hauptanspruchs hat demgegenüber den Vorteil, daß jede Station des Netzwerks sich selbst hinsichtlich ihrer Funktionsfähigkeit kontrolliert. Keine Station kontrolliert eine andere Station hinsichtlich deren Funktionsfähigkeit. Weiterhin vorteilhaft ist, daß das Verfahren unabhängig von Einzelheiten der Systemkonfiguration in der Weise ist, daß zur Erkennung von Defekten keine Verwaltung oder Übertragung von Informationen über die Systemkonfiguration erforderlich ist. Ebenfalls vorteilhaft ist, daß sporadisch auftretende Störungen von permanenten Defekten unterschieden werden können. Weiterhin vorteilhaft ist, daß die sich selbst als defekt erkennenden Stationen ganz oder teilweise vom Bus abgetrennt werden können, so daß die Kommunikation zwischen den übrigen Busstationen zumindest eingeschränkt noch möglich ist. Darüber hinaus ist es vorteilhaft, daß für eine Selbstüberwachung der Busstationen keine redundanten Anordnungen lokal in der jeweiligen Station zur Verfügung stehen müssen. Es wird vielmehr nur die in einem Netzwerk ohnehin schon vorhandene Redundanz aufgrund des Vorhandenseins protokollkompatibler Busstationen ausgenutzt.

Durch die in den Unteransprüchen aufgeführten Maßnahmen sind vorteilhafte Weiterbildungen und Verbesserungen des im Hauptanspruch angegebenen Verfahrens möglich. So ist in Anspruch 7 ein Schnittstellencontroller für die einzelnen Stationen des lokalen Netzwerkes beansprucht, der die Mittel aufweist, die für die Durchführung des Verfahrens nach Anspruch 1 und für die Gewinnung der vorteilhaften Wirkungen des Anspruchs 1 erforderlich sind.

Zeichnung:

Ausführungsbeispiele der Erfindung (allgemein sowie bezogen auf das für den Einsatz in Automobilen konzipierte Controller Area Network) sowie des Standes der Technik sind in der Zeichnung dargestellt und werden im folgenden näher beschrieben und erläutert. Es zeigen:

Figur 1: Beispiel für ein lokales Netzwerk
Figur 2: Acknowledgement-Sektor innerhalb einer Botschaft
Figur 3: Abbruch einer Botschaft
Figur 4: Blockschaltbild des Funktionsablaufs
Figur 5: Einbindung der Stationsüberwachung
Figur 6: Ausführungsbeispiel für eine Stationsüberwachung

Beschreibung der Ausführungsbeispiele

1. Statistische Stationsüberwachung

Das Ziel besteht darin, in Stationen durch fortlaufend durchgeführte Selbstüberwachung sporadisch auftretende Störungen von permanenten Defekten zu unterscheiden, damit defekte Stationen lokal abgeschaltet und vom Netzwerk getrennt werden können.

Durch die Notwendigkeit, daß alle in einem Netzwerk vorhandenen Stationen protokollkompatibel sein müssen, ergibt sich zwangsweise auf Systemebene Redundanz, unabhängig von der Struktur der einzelnen Stationen.

Diese Redundanz auf Systemebene findet ihren Niederschlag in dem auf dem Bus sichtbaren, sich aus dem Zusammenspiel aller Stationen ergebenden Bitstrom. Dieser Bitstrom erhält insbesondere Informationen wie Fehlermeldungen und Bestätigungen (Acknowledge) für fehlerhafte bzw. korrekte Übertragungen.

Indem die internen Zustände der eigenen Station zu den aus dem Bitstrom gewonnenen Informationen in Beziehung gesetzt werden, erhält jede Station die Möglichkeit. etwaiges eigenes Fehlverhalten zu erkennen, zu klassifizieren und zu gewichten, ohne daß in der eigenen Station Redundanz implementiert sein muß.

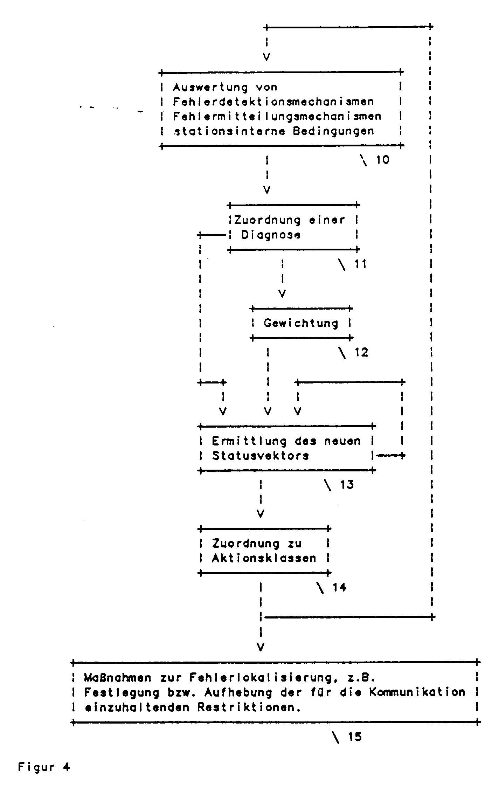

Fehlverhalten einer Station kann auf sporadischen Störungen oder auf permanenten Defekten beruhen. Um beide Fehlerursachen voneinander unterscheiden zu können, wird in jeder Station, unabhängig von allen anderen, eine Statistik über das relative Aufkommen gewichteten Fehlverhaltens der eigenen Station geführt. Fig 4. beschreibt den Funktionsablauf der Selbstüberwachung. Der Gesamtheit der in einer Fehlersituation zur Verfügung stehenden Informationen, die sich aus Kombinationen der Meldungen von Fehlerdetektionsmechanismen. Fehlermitteilungsmechanismen sowie von stationsinternen Bedingungen zusammensetzen, wird eine Diagnose zugeordnet. Diese Diagnose ist ein Zwischenresultat des Überwachungsprozesses. sie klassifiziert den vorliegenden Fehler, wobei ihr unmittelbar noch keine Aktion zugeordnet ist.

Vielmehr gibt es eine Anzahl von Statusworten, die den Zustand der Station in bezug auf das Fehlergeschehen beschreiben, wobei dieser Zustand durch Fehlerhäufigkeit und Fehlerarten über längere Zeiträume hinweg bestimmt ist.

Jede Diagnose wird in bezug auf jedes Statuswort mit einer Gewichtung versehen, und mit diesen Gewichtungen werden bei Vorliegen einer Diagnose die Statusworte modifiziert. Die eigentlichen Maßnahmen zur Fehlerlokaisierung werden in Abhängigkeit von den Werten der Statusworte, die zu dem Statusvektor zusammengefaßt werden, ergriffen. Nimmt der Statusvektor bestimmte (vektorielle) Werte an, dann werden diesen Werten entsprechende Aktionen ausgelöst.

1.1. Fehlerdetektionsmechanismen, Fehlermitteilungsmechanismen, stationsinterne Bedingungen (Fig. 4. Block 10)

Die einzelne Station entscheidet bei jeder gesendeten oder empfangenen Botschaft. ob diese aus der Sicht der Station korrekt oder nicht korrekt übertragen worden ist.

Um zu entscheiden, ob eine Botschaft korrekt oder nicht korrekt übertragen worden ist, gibt es in jeder Station verschiedene Mechanismen:

a) Eine Menge von Fehlerdetektionsmechanismen. Entdeckung globaler, sich auf alle Stationen auswirkende, sowie lokaler, nur bei einem Teil der Stationen wirksamer Fehler. Beispiele für Fehlerdetektionsmechanismen sind CRC-Prüfung, Überwachung der Bit-Stuffing Regeln, Format-Überprüfung, Eigenüberwachung z.B. der gesendeten Botschaft.

Der Menge der Fehlerdetektionsmechanismen ist eine Variable FD mit ganzzahligen Werten zugeordnet, die angibt, welcher Fehlerdetektionsmechanismus bzw. welche Kombination von diesen vorliegt und zu welchem Zeitpunkt und in welchem Zusammenhang der Fehler entdeckt wird. Z.B. könnte bedeuten:

$FD = 0$ :　kein Fehler

$FD = 1$ :　mindestens einer der Detektoren meldet einen Fehler wahrend der Übertragung einer Botschaft (Kombination aller Fehlerdetektionsmechanismen)

$FD = 2$ :　CRC - Fehler

$FD = 3$ :　Fehler während Fehlerbehandlungsroutine etc.

b) Eine Menge von Fehlermitteilungsmechanismen zwischen den Stationen. Beispiele für Fehlermitteilungsmechanismen sind Fehlermeldungen, positives Acknowledgement, negatives Acknowledgement, Unterscheidung der Fehlermeldungen nach der Schwere des Fehlers (erheblicher Fehler, weniger erheblicher Fehler).

Der Menge der Fehlermitteilungsmechanismen ist eine Variable FM mit ganzzahligen Werten zugeordnet, die angibt, welcher Fehlermitteilungsmechanismus bzw. welche Kombination von diesen vorliegt. Z.B. könnte bedeuten:

$FM = 0$ :　positives Acknowledgement

$FM = 1$ :　negatives Acknowledgement

$FM = 2$ :　kein Acknowledgement

$FM = 3$ :　Fehlermeldung

etc.

c) Eine Menge stationsinterner Bedingungen.

Dabei gibt es botschaftsbezogene Bedingungen, z.B. ob die Station Sender oder Empfänger der Botschaft ist. Und es gibt stationsbezogene Bedingungen, z.B. ob die Selbstüberwachung der Station bereits Einschränkungen für die Teilnahme an der Kommunikation auferlegt hat oder nicht.

Der Menge der internen Bedingungen ist eine Variable IB mit ganzzahligen Werten zugeordnet, die angibt, welche interne Bedingung bzw. welche Kombination von diesen vorliegt. Z.B. könnte bedeuten:

$IB = 0$ :　Station ist Sender der Botschaft

$IB = 1$ :　Station ist Empfänger der Botschaft

etc.

## 1.2. Zuordnung von Diagnosen (Fig. 4. Block 11)

Die Fehlerüberprüfungsinstanz ordnet den Tripeln (FD,FM,IB) eine Diagnose aus der Menge D der Diagnosen zu.

Eine Diagnose kann bedeuten:

Botschaft korrekt übertragen, Botschaftsübertragung mit erheblichem oder weniger erheblichen Fehler behaftet, Fehler während einer Fehlermeldung etc.

Die Fehlerüberprüfungsinstanz definiert also eine Abbildung (FD,FM,IB) ---> D U {}

(Bildbereich: Menge der Diagnosen vereinigt mit der leeren Menge).

Eine Regel besagt, daß ein Tripel (FD,FM,IB)

- relevant ist (nämlich auf eine Diagnose aus D abgebildet wird)
- irrelevant ist (nämlich auf die leere Menge {} abgebildet wird).

Zur Festlegung des Regelwerks sind nur die relevanten Regeln anzugeben, die irrelevanten sind dadurch implizit mitbestimmt.

## 1.3. Statusworte, Gewichtung der Diagnosen (Fig. 4, Block 12)

Es gibt in jeder Station

$n$     Statusworte $S_m$ $1 \leqq m \leqq n$ ,

$k$     unterschiedene Diagnosen, die als Ergebnisse von Fehlerüberprüfungen auftreten (z.B. Botschaft korrekt, mit erheblichem/weniger erheblichem Fehler behaftet):

$$D_i \; 1 \leqq i \leqq k .$$

Die Diagnosen können auch als k-dimensionale Vektoren geschrieben werden:

```
D    =  (0,...0,1,0,...0)         (1 ≤ i ≤ k)
 i              1
             i-te Stelle              .
```

Zu jedem Statuswort $S_m$ und jeder Diagnose $D_i$ gibt es eine ganze Zahl

$$g_{i,m} \; (1 \leqq i \leqq k , \; 1 \leqq m \leqq n),$$

welche das Gewicht der entsprechenden Diagnose angibt, mit dem das entsprechende Statuswort die Diagnose berücksichtigt. Dieses Gewichte-System kann als k x n Matrix geschrieben werden:

$$G(D,S) \; = \; (g_{i,m}) \; (1 \leqq i \leqq k , \; 1 \leqq m \leqq n) ,$$

## 1.4. Durchführung einer Fehlerstatistik, Statusvektor (Fig. 4, Block 13)

Der Vektor der Statusworte innerhalb einer Station wird nach jedem Ereignis, dem eine Diagnose $D_i$ zugeordnet ist, modifiziert:

$$(S_{alt} , D_i , G(D,S) ) \; ---> S_{neu} .$$

Die Abbildung kann z.B. folgendermaßen definiert werden:

$$(S_l,...,S_n) := (S_l,...,S_n) + D_i * G(D,S)$$

## 1.5. Zuordnung des Statusvektors zu Aktionsklassen, Maßnahmen zur Fehlerlokalisierung (Fig. 4, Block 14,15)

Die Statusvektoren werden von der Stationsüberwachung benutzt, um Aktionen, wie z.B. Festlegung oder Aufhebung von Restriktionen für den Buszugang, auszulösen.

Hierzu werden Aktionsklassen definiert: Eine Aktionsklasse ist eine Teilmenge der Menge aller Statusvektoren.

Ist S der Statusvektor vor einem den Statusvektor modifizierenden Ereignis und S' der durch dieses Ereignis modifizierte Statusvektor, und ist A eine Aktionsklasse, dann wird die zu A zugehörige Aktion (z.B. Festlegung von Restriktionen für den Buszugang) ausgelöst, wenn gilt:

$$\text{nicht } S \in A ; S' \in A .$$

In dem genannten Beispiel werden die Regeln für den Buszugang eingeschränkt, sobald der Statusvektor in A liegt.

In der Stationsüberwachung kann neben einer Aktion auch die zugehörige Umkehraktion realisiert sein. Bezüglich des obigen Beispiels wäre die Umkehraktion die Aufhebung der Restriktionen für den Buszugang.

Die Aktionsklassen für Aktion und zugehörige Umkehraktion sollten disjunkt sein, damit durch keine Modifikation des Statusvektors Aktion und Umkehraktion gleichzeitig auszulösen sind.

Überdecken die Aktionsklassen für Aktion und Umkehraktion die gesamte Menge aller Statusvektoren, dann gilt:

Ist A die Aktionsklasse für die Aktion, dann wird die Aktion ausgelöst, sobald für den Statusvektor S gilt:

$$S \in A .$$

Die zugehörige Umkehr-Aktion wird ausgelöst, sobald für den Statusvektor S gilt:

$$\text{nicht } S \in A .$$

Es ist aber nicht notwendig, daß die Aktionsklassen für Aktion und Umkehraktion die Menge aller Statusvektoren überdecken. Liegt keine Überdeckung vor, und zwar in in einer solchen Weise, daß durch entsprechende Modifikationen der Statusvektor aus einer Aktionsklasse herausfallen kann, ohne gleichzeitig in die Umkehr-Aktionsklasse hineinzufallen, dann wird auf diese Weise eine Hysterese für das Auslösen von Aktion und Umkehraktion definiert. Denn per definitionem werden Aktionen vom aktuellen Statusvektor beim Eintritt in, nicht aber beim Austritt aus einer Aktionsklasse ausgelöst.

Beispiele

Die folgenden 4 Beispiele zeigen Möglichkeiten für die Definition von Aktionsklassen.

Die Aktionsklassen und Umkehr-Aktionsklassen werden in diesen Beispielen jeweils nach folgendem Muster gebildet:

Es sei x eine ganze Zahl. $S(m,x)$ und $S*(m,x)$ für $1 \leqq m \leqq n$ seien die Mengen derjenigen Statusvektoren, für die gilt:

$S \in S(m,x) <==>$
    $S = (x_l, \ldots , x_n)$
    mit $x_i$ I $\leqq i \leqq n$ ganzen Zahlen
    und $x_m \geqq x$ ;

$S \in S*(m,x) <==>$
    $S = (x_l, \ldots , x_n)$
    mit $x_i$ I $\leqq i \leqq n$ ganzen Zahlen
    und $x_m \leqq x$ .

- Definition der Aktionsklassen:
zu einer gegebenen ganzen Zahl x wird die Aktionsklasse A(x) definiert durch:

```
A(x)   :=        U     S(m,x)      (Vereinigungsmenge) .
              1 ≤ m ≤ n
```

Dann ist A(x) die Menge der Statusvektoren, für die mindestens ein Statuswort größer als x ist.

- Definition der Umkehr-Aktionsklassen:
zu einer gegebenen ganzen Zahl x wird die UmkehrAktionsklasse A*(x) definiert durch:

```
A*(x)   :=        ∩     S*(m,x)      (Durchnittsmenge) .
              1 ≤ m ≤ n
```

Dann ist A*(x) die Menge der Statusvektoren, für die alle Statusworte kleiner als x sind.

a) Die Aktionsklasse "Benachrichtigung der Anwendungsebene wegen häufiger Busstörungen" kann z.B. so gebildet werden:

Man nimmt eine ganze Zahl x1 und bildet die Aktionsklasse A(x1).

Eine Benachrichtigung erfolgt, wenn für den Statusvektor S vor einer aktuellen Störung und für den Statusvektor S′ nach dieser Störung gilt:

$$S' \in A(x1) ; \text{nicht } S \in A(x1).$$

Die Umkehraktion, die "Benachrichtigung der Anwendungsebene wegen abgeklungener Störungshaufigkeit des Busses" kann ähnlich gebildet werden:

Man nimmt eine ganze Zahl x2 und bildet die Umkehr-Aktionsklasse A*(x2)

Eine Benachrichtigung erfolgt, wenn für den Statusvektor S vor einer aktuellen Störung und für den Statusvektor S' nach dieser Störung gilt:

$$S' \in A * (x2) \; ; \; nicht \; S \in A * (x2) \, .$$

Wählt man x1 > x2 + 1, dann ergibt sich eine Hysterese bezüglich des Auslösens der Benachrichtigungen.

b) Die Aktionsklasse "Veränderung der Regeln für den Buszugang" kann z.B. so gebildet werden:

Man nimmt eine ganze Zahl x3 und bildet die Aktionsklasse A(x3)
Die Regeln for den Buszugang werden verändert (z.B. kann bei einem Multi-Master-Bussystem verlangt werden, daß die Station nur dann zweimal hintereinander senden darf, wenn sie zwischen diesen beiden Übertragungen eine Pause läßt; auf diese Weise wird erreicht, daß andere sendewillige Stationen unabhängig von den Botschaftsprioritäten beim Senden Vorrang gegenüber der 2. zu übertragenden Botschaft haben), sobald für den aktuellen Statusvektor S gilt:

$$S \in A(x3) \, .$$

Die Umkehraktion, das Wiederherstellen der normalen Regeln für den Buszugang" kann ähnlich gebildet werden:
Man nimmt eine ganze Zahl x4 und bildet die Umkehr-Aktionsklasse A∗(x4)
Die ursprünglichen Regeln für den Buszugang werden wiederhergestellt, sobald für den aktuellen Statusvektor S gilt

$$S \in A * (x4) \, .$$

Wählt man x3 > x4 + 1, dann ergibt sich eine Hysterese bezüglich des Veränderungen der Regeln für den Buszugang.

c) Die Aktionsklasse "Aussetzen der Zulassung von Fehlermeldungen" kann z.B. so gebildet werden:

Man nimmt eine ganze Zahl x5 und bildet die Aktionsklasse A(x5).
Fehlermeldungen dürfen (im Fehlerfalle) nicht mehr abgesetzt werden, sobald für den aktuellen Statusvektor S gilt:

$$S \in A(x5) \, .$$

Auf diese Weise kann z.B. erreicht werden, daß Botschaften nicht aufgrund eines Defektes irrtümlicherweise ungültig werden.
Die Umkehraktion, das "Wiederzulassung des Absetzens von Fehlermeldungen" kann ähnlich gebildet werden:
Man nimmt eine ganze Zahl x6 und bildet die Umkehr-Aktionsklasse A∗(x6).
Fehlermeldung dürfen (im Fehlerfalle) wieder abgesetzt werden, sobald für den aktuellen Statusvektor S gilt

$$S \in A * (x6) \, .$$

Wählt man x5 > x6 + 1, dann ergibt sich eine Hysterese bezüglich des Aussetzens und der Wiederzulassung des Absetzens von Fehlermeldungen.

d) Die Aktionsklasse "Durchführung der Selbstabschaltung" kann z.B. so gebildet werden:

Man nimmt eine ganze Zahl x7 und bildet die Aktionsklasse A(x7).
Die Station wird bezüglich des Sendens und/oder bezüglich des Empfangens von Botschaften vom Bus abgekoppelt, sobald für den aktuellen Statusvektor S gilt:

$$S \in A(x7) \, .$$

Auf diese Weise kann z.B. erreicht werden, daß defekte Stationen den Busbetrieb nicht mehr stören können.
Die Wiederanschließung einer vom Busgeschehen abgekoppelten Station kann in verschiedener Weise erfolgen. So kann eine Regenerierung über die Anwendungsebene stattfinden, oder es kann eine selbstüberwachte Zeitdauer geben, nach deren Ablauf eine Wiederanschaltung automatisch erfolgt. Ebenso kann eine vorgegebene Anzahl korrekt empfangener Botschaften (nur bei Sendeabschaltung) abgewartet werden, etc.

1.6. Einbindung der Stationsüberwachung in den Kommunikationsablauf

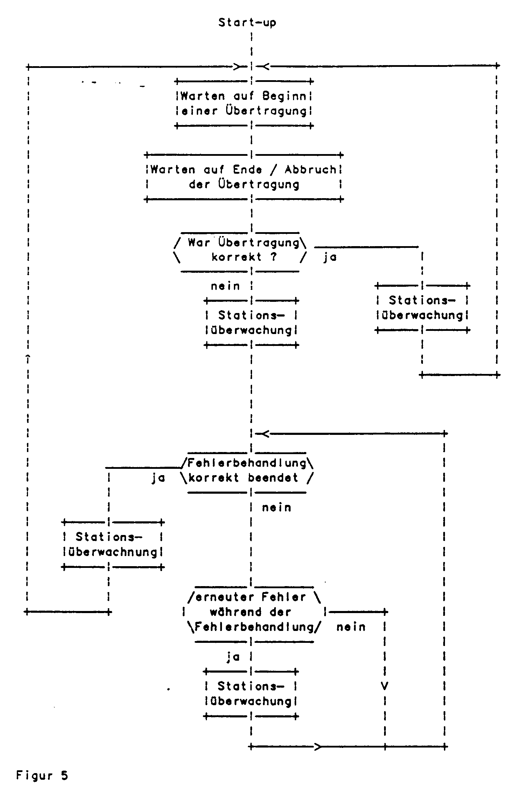

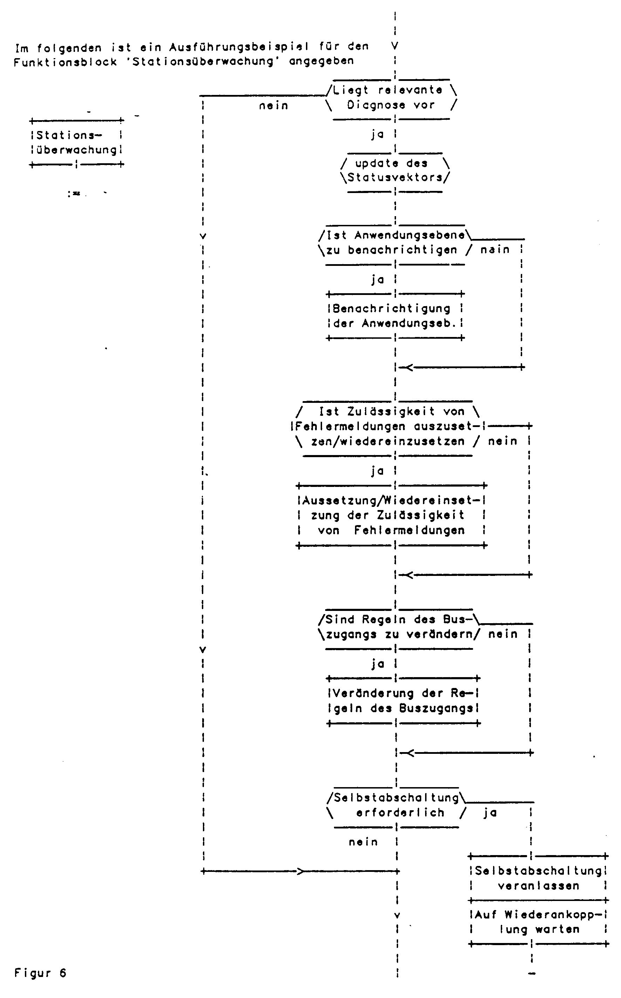

Die Realisierung der Stationsüberwachung erfolgt mit Hilfe der in Fig. 5 und Fig. 6 angegebenen Flußdiagramme, die hardwaremäßig oder auf einem handelsüblichen µC softwaremäßig implementiert werden können.
Der Funktionsblock 'Stationsüberwachung' muß dazu definiert und zeitlich richtig in den Kommunikationsprozeß eingebunden werden.

2. Parametrisierungsbeispiel CAN

Das beschriebene Verfahren zur Fehlerlokalisierung wurde beim Kommunikationsnetzwerk CAN implementiert. Dabei wurden die im folgenden angegebenen Parameter gewählt.

2.1. Fehlerdetektionsmechanismen, Fehlermitteilungsmechanismen, stationsinterne Bedingungen bei CAN

Die Variablen FD für die Fehlerdetektionsmechanismen, FM für die Fehlermitteilungsmechanismen und IB für die stationsinternen Bedingungen werden wie folgt definiert.

Definition von FD:

FD = 0 :    kein Fehler
FD = 1 :    Fehler während der Übertragung einer Botschaft, nicht aufgrund fehlenden Acknowledgements
FD = 2 :    Fehler während der Übertragung einer Botschaft, aufgrund fehlenden Acknowledgements
FD = 3 :    Fehler während der Fehlerbehandlungsroutine

Definition von FM:

FM = 0 :    positives Acknowledgement (Alle Empfänger bestatigen damit simultan den fehlerfreien Empfang der übertragenen Botschaft. Beim Sender kommt die Information an, daß mindestens ein Empfänger die Botschaft fehlerfrei empfangen hat. Damit ist keine Festlegung von Stationsadressen erforderlich.)
FM = 1 :    erheblicher Fehler, dadurch gekennzeichnet, daß die zugehörige Fehlermeldung weitere Fehlermeldungen bei anderen Stationen auslöst.
FM = 2 :    weniger erheblicher Fehler, dadurch gekennzeichnet, daß die zugehörige Fehlermeldung bei keiner anderen Station eine Fehlermeldung auslöst.

Definition von IB:

IB = 0 :    Sender der Botschaft, berechtigt, im Fehlerfall Fehlermeldungen abzusetzen
IB = 1 :    Sender der Botschaft, nicht berechtigt, im Fehlerfall Fehlermeldungen abzusetzen
IB = 2 :    Empfänger der Botschaft

2.2 Zuordnung von Diagnosen

Es gibt 7 unterschiedliche Diagnosen, und die Abbildung
(FD,FM,IB) ---> D U {}
ist gegeben durch:
1. FD = 0 und FM = 0 und IB = 0
-> Diagnose D1
2. FD = 0 und FM = 0 und IB = 1
-> Diagnose D1
3. FD = 0 und FM = 0 und IB = 2
-> Diagnose D2
4. FD = 1 und FM = 1 und IB = 0
-> Diagnose D3
5. FD = 1 und FM = 2 und IB = 0
-> Diagnose D3
6. FD = 1 und FM = 1 und IB = 1
-> Diagnose D3
7. FD = 1 und FM = 1 und IB = 1
-> Diagnose D3
8. FD = 2 und FM = 1 und IB = 0
-> Diagnose D3
9. FD = 2 und FM = 2 und IB = 0
-> Diagnose D3
10. FD = 2 und FM = 1 und IB = 1

-> Diagnose D3
11. FD = 1 und FM = 1 und IB = 2
-> Diagnose D4
12. FD = 2 und FM = 1 und IB = 2
-> Diagnose D4
13. FD = 1 und FM = 2 und IB = 2
-> Diagnose D5
14. FD = 2 und FM = 2 und IB = 2
-> Diagnose D5
15. FD = 3 und FM = 1 und IB = 0
-> Diagnose D6
16. FD = 3 und FM = 2 und IB = 0
-> Diagnose D6
17. FD = 3 und FM = 1 und IB = 2
-> Diagnose D7
18. FD = 3 und FM = 2 und IB = 2
-> Diagnose D7
Alle anderen Kombinationen werden auf die leere Menge abgebildet.

2.3. Statusworte, Gewichtung der Diagnosen

Anzahl der Statusworte:     $n = 2$.
$S_1$ : 8 bit Wort
$S_2$ : 7 bit Wort

Den Statusworten wird bei underflow der Wert 0 und bei overflow die Werte 256 bzw. 128 zugewiesen. Die Matrix G(D,S) lautet:

$$G(D,S) \; = \; \begin{pmatrix} -1 & 0 \\ 0 & -1 \\ 8 & 0 \\ 0 & 9 \\ 0 & 1 \\ 8 & 0 \\ 0 & 8 \end{pmatrix}$$

Die Einträge in diese Matrix wurden so gewählt, daß im Mittel senderseitig auf 8 korrekte eine inkorrekte Botschaft tolerierbar ist. Empfängerseitig ist das tolerierbare Verhältnis 9 korrekte auf eine inkorrekte Botschaft bei erheblichen Fehlern bzw. eine korrekte auf eine inkorrekte Botschaft bei nicht erheblichen Fehlern.

2.4. Durchführung der Fehlerstatistik

Die Modifikation des Statusvektors wird folgendermaßen vorgenommen:
$$(S_1,...,S_n) := (S_1,...,S_n) + D_i * G(D,S)$$

2.5. Zuordnung des Statusvektors zu Aktionsklassen, Maßnahmen zur Fehlerlokalisierung

a) Benachrichtigung der Anwendungsebene wegen häufiger Busstörungen

Passend zu Beispiel a) von Abschnitt 1.5. wird $x1 = x2 = 96$ gewählt.

b) Veränderung der Regeln für den Buszugang

Passend zu Beispiel b) von Abschnitt 1.5. wird x3 = x4 = 128 gewählt.

c) Kein Absetzen von Fehlermeldungen im Fehlerfall

Passend zu Beispiel c) von Abschnitt 1.5. wird x5 = x6 = 128 gewählt.

d) Durchführung der Selbstabschaltung

Den Bezeichnungen von 1.5. folgend ist die zugehörige Aktionsklasse gegeben durch
S(1,256) ,
d.h. Selbstabschaltung erfolgt bei overflow von Statuswort $S_1$.
Die betreffende Station wird vom Bus als Sender und Empfänger abgekoppelt.
Die Wiederankopplung einer zuvor selbstabgeschalteten Station erfolgt
1. unter CPU-Kontrolle, d.h. die CPU entscheidet, ob die - Station vorübergehend oder dauernd vom Bus getrennt bleibt.
2. Es gibt eine CAN-Controller interne Wartezeit, die in jedem Fall und zusätzlich zu einer CPU-definierten Wartezeit bis zur Wiederankopplung eingehalten wird.

## Patentansprüche

1. Verfahren zur Lokalisierung defekter Stationen in lokalen Netzwerken mit mehreren verteilt arbeitenden Stationen, die über einen seriellen Bus Botschaften untereinander austauschen, wobei von jeder Station mindestens der Bitstrom auf dem Bus mit Hilfe von Fehlererkennungsmechanismen kontinuierlich überwacht wird, wobei die erkannten Fehler mit Hilfe von Fehlermitteilungsmechanismen den jeweils anderen Stationen zur Kenntnis gegeben werden, wobei jeder Station eine Anzahl von stationsinternen Bedingungen, insbesondere Empfänger bzw. Sender einer Botschaft zu sein zugeordnet ist, dadurch gekennzeichnet, daß von jeder Station eine stationseigene, statistische Auswertung mindestens der mitgeteilten Fehler und/oder selbst erkannten Fehler durchgeführt wird, um eine Fehlerhäufigkeit zu ermitteln, wobei bei der statistischen Auswertung eine von den stationsinternen Bedingungen abhängige Gewichtung der mitgeteilten und/oder selbst erkannten Fehler vorgenommen wird, daß die ermittelte Fehlerhäufigkeit mit mindestens einem vorgegebenen Grenzwert verglichen wird und daß bei Über- oder Unterschreitung des mindestens einen Grenzwertes jeweils mindestens eine vorbestimmte Aktion ausgelöst wird.

2. Verfahren nach Anspruch 1, dadurch gekennzeichnet, daß in jeder Station in Abhängigkeit der Fehlererkennungsmechanismen (FD), Fehlermitteilungsmechanismen (FM) und stationsinternen Bedingungen (IB) eine Diagnose D(FD, FM, IB) gewonnen wird.

3. Verfahren nach Anspruch 2, dadurch gekennzeichnet, daß unter gewichteter Verwendung der Diagnose D(FD, FM, IB) Statusworte modifiziert werden.

4. Verfahren nach Anspruch 3, dadurch gekennzeichnet, daß die Aktion in Abhängigkeit von der Gesamtheit der Inhalte der Statusworte (Statusvektor) gewählt wird.

5. Verfahren nach Anspruch 4, dadurch gekennzeichnet, daß als Aktion wenigstens eine der folgenden Maßnahmen ausgelöst wird:
   - Benachrichtigung der Anwendungsebene wegen häufiger Busstörungen,
   - Benachrichtigung der Anwendungsebene wegen abgeklungener Störungshäufigkeit des Busses,
   - Veränderung der Regeln für den Buszugang,
   - Wiederherstellen der normalen Regeln für den Buszugang,
   - Aussetzen der Zulassung von Fehlermeldungen,
   - Wiederzulassung des Absetzens von Fehlermeldungen,
   - Durchführung der Selbstabschaltung,
   - Wiederanschließung abgeschalteter Stationen.

6. Verfahren nach einem der vorhergehenden Ansprüche, dadurch gekennzeichnet, daß im Rahmen der sta-

EP 0 335 917 B1

tistischen Auswertung tolerierbare Verhältnisse bezüglich des Auftretens bzw. des Nichtauftretens von relevanten Fehlern festgelegt werden.

7. Schnittstellencontroller zur Abwicklung des Verfahrens nach einem der vorhergehenden Ansprüche, mit Mitteln, um Botschaften von einem angeschlossenen seriellen Bus zu empfangen und auf diesen abzusenden, mit Mitteln zur kontinuierlichen Überwachung des Bit-Stromes auf dem angeschlossenen seriellen Bus, wobei der Schnittstellencontroller Mittel enthält, die nach einer Fehlererkennung eine Fehlermitteilung auf den angeschlossenen seriellen Bus absenden, wobei dem Schnittstellencontroller eine Anzahl von stationsinternen Bedingungen, insbesondere Empfänger bzw. Sender einer Botschaft zu sein, zugeordnet sind, dadurch gekennzeichnet, daß er Mittel für eine statistische Auswertung von selbst erkannten und/oder über den seriellen Bus mitgeteilten Fehlern enthält, um eine Fehlerhäufigkeit zu ermitteln, daß er weitere Mittel enthält, die bei der statistischen Auswertung in Abhängigkeit der stationsinternen Bedingungen eine Gewichtung der mitgeteilten und/oder selbst erkannten Fehler vornehmen, daß er die ermittelte Fehlerhäufigkeit mit mindestens einem vorgegebenen Grenzwert vergleicht und daß er bei Über- oder Unterschreitung des mindestens einen Grenzwertes eine vorbestimmte Aktion auslöst.

## Claims

1. A process for the localization of defective stations in local networks having a number of distributedly operating stations, which exchange messages with one another via a serial bus, at least the bit stream on the bus being continuously monitored by each station with the aid of error detection mechanisms, the detected errors being brought to the attention of the other stations respectively with the aid of error reporting mechanisms, each station being assigned a number of station-internal conditions, in particular to be a receiver or sender of a message, wherein a station-own, statistical evaluation of at least the reported errors and/or self-detected errors is carried out by each station in order to determine an error frequency, the statistical evaluation including a weighting of the reported and/or self-detected errors which is dependent on the station-internal conditions, wherein the determined error frequency is compared with at least one predetermined limit value and wherein at least one predetermined action is initiated in each case in the event of overshooting or undershooting of the at least one limit value.

2. The process as claimed in claim 1, wherein a diagnosis D(FD, FM, IB) is obtained in each station in dependence on the error detection mechanisms (FD), error reporting mechanisms (FM) and station-internal conditions (IB).

3. The process as claimed in claim 2, wherein status words are modified under weighted use of the diagnosis D (FD, FM, IB).

4. The process as claimed in claim 3, wherein the action is chosen in dependence on the totality of the contents of the status words (status vector).

5. The process as claimed in claim 4, wherein at least one of the following measures is initiated as an action:
   - Notification of the user level due to frequent bus faults,
   - Notification of the user level due to reduced fault frequency of the bus,
   - Changing the rules for bus access,
   - Restoration of the normal rules for bus access,
   - Suspension of the authorization of error messages,
   - Re-authorization of the issuing of error messages,
   - Implementation of self-disconnection,
   - Reconnection of disconnected stations.

6. The process as claimed in one of the preceding claims, wherein tolerable ratios with respect to the occurrence and the non-occurrence of relevant errors are established within the framework of the statistical evaluation.

7. An interface controller for handling the process as claimed in one of the preceding claims, having means for receiving messages from and sending messages to a connected serial bus, having means for continuous monitoring of the bit stream on the connected serial bus, the interface controller including means which send an error report to the connected serial bus after an error detection, and the interface controller

11

being assigned a number of station-internal conditions, in particular to be a receiver or sender of a message, wherein it includes means for a statistical evaluation of self-detected errors and/or errors reported via the serial bus, in order to determine an error frequency, wherein it includes further means which perform in the statistical evaluation a weighting of the reported and/or self-detected errors in dependence on the station-internal conditions, wherein it compares the determined error frequency with at least one predetermined limit value and wherein it initiates a predetermined action in the event of overshooting or undershooting of the at least one limit value.

## Revendications

1.  Procédé pour la localisation de stations défectueuses dans des réseaux locaux avec plusieurs stations fonctionnant de façon répartie, qui échangent des messages entre elles par l'intermédiaire d'un bus sériel, tandis qu'à partir de chaque station au moins le courant de bit sur le bus est continuellement surveillé à l'aide de mécanismes de reconnaissance d'erreur, tandis que les erreurs reconnues sont portées à la connaissance des autres stations respectives à l'aide de mécanismes de communication d'erreurs, et tandis qu'à chaque station est associé un certain nombre de conditions internes de stations, notamment d'être réceptrices ou bien émettrices d'un message, caractérisé en ce qu'à partir de chaque station, une exploitation statistique propre à la station au moins des erreurs communiquées et ou des erreurs reconnues par la station elle même est effectuée pour déterminer une fréquence d'erreurs, tandis que lors de cette exploitation statistique, une pondération dépendant des conditions internes de stations des erreurs communiquées et/ou reconnues par la station elle-même est effectuée, en ce que la fréquence d'erreurs déterminées est comparée avec au moins une valeur limite prédéfinie et en ce que lors du franchissement vers le haut ou vers le bas d'une valeur limite au moins une action prédéterminée est respectivement déclenchée.

2.  Procédé selon la revendication 1, caractérisé en ce que dans chaque station en fonction des mécanismes de reconnaissance d'erreurs (FD), des mécanismes de communication d'erreurs (FM) et des conditions internes de stations (IB) un diagnostic D(FD, FM, IB) est obtenu.

3.  Procédé selon la revendication 2, caractérisé en ce que des mots qualificatifs sont modifiés sous utilisation pondérée du diagnostic D(FD, FM, IB).

4.  Procédé selon la revendication 3, caractérisé en ce que l'action est choisie en fonction de la totalité des contenus des mots qualificatifs (vecteur d'état).

5.  Procédé selon la revendication 4, caractérisé en ce que comme action au moins une des dispositions suivantes est déclenchée :
    - préparation des plans d'application en raison de perturbations plus fréquentes du bus.
    - préparation des plans d'application en raison d'une fréquence de perturbations déclinantes du bus.
    - modification des règles pour l'accès au bus.
    - rétablissement des règles normales pour l'accès au bus.
    - suspension de l'autorisation d'annonce d'erreur.
    - autorisation à nouveau du dépôt d'annonce d'erreur.
    - mise en oeuvre de l'auto-déconnexion.
    - raccordement à nouveau des stations déconnectées.

6.  Procédé selon une des revendications précédentes, caractérisé en ce que dans le cadre de l'exploitation statistique des rapports tolérables sont déterminés en ce qui concerne l'apparition ou bien la non apparition d'erreurs importantes.

7.  Contrôleur d'interfaces pour le déroulement du procédé selon une des revendications précédentes, avec des moyens pour recevoir des messages à partir d'un bus sériel raccordé et pour en émettre sur ce bus, avec des moyens pour surveiller continuellement le courant du bit sur le bus sériel raccordé, tandis que le contrôleur d'interfaces comprend des moyens qui après une reconnaissance d'erreurs émettent une communication d'erreurs au bus sériel raccordé, tandis qu'au contrôleur d'interfaces, sont associées un certain nombre de conditions internes de stations, notamment d'être réceptrices ou bien émettrices d'un message, caractérisé en ce qu'il comprend des moyens pour une exploitation statistique d'erreurs reconnues par la station elle-même et/ou communiquer par l'intermédiaire du bus sériel, pour déterminer une fréquence d'erreurs, en ce qu'il comprend d'autres moyens qui lors de l'exploitation statistique procèdent en fonction des conditions internes de station à une pondération des erreurs communiquées et/ou reconnues par la station elle-même en ce qu'il compare la fréquence d'erreurs déterminée avec au moins une valeur limite prédéfinie et en ce qu'en cas de franchissement vers le haut ou vers le bas de cette valeur limite au moins unique, il déclenche une action prédéterminée.

Figur 1

↑ Botschaftsende

Sektor für Acknowledgement

. Botschaftsbeginn

Figur 2

|Fehlererkennung durch mindestens eine Station

|Fehlerreaktion

↑ (Botschaftsende)

Botschaftsbeginn

(Sektor für Acknowledgement)

|irreguläres Ende der Übertragung

Figur 3

```
                                    +---------------------+
                                    |                     :
                                    v                     :
              +----------------------------------+        :
              | Auswertung von                   |        :
              | Fehlerdetektionsmechanismen      |        :
  · -   ..  - | Fehlermitteilungsmechanismen     |        :
              | stationsinterne Bedingungen      :        :
              +----------------------------------+        :
                            |             \ 10           :
                            |                            :
                            v                            :
                    +-----------------+                  :
                    |Zuordnung einer  |                  :
              +-----| Diagnose        |                  :
              |     +-----------------+                  :
              |            |     \ 11                    :
              |            |                             :
              |            v                             :
              |     +-----------------+                  :
              |     | Gewichtung      |                  :
              |     +-----------------+                  :
              |            |     \ 12                    :
              |            |                             :
        +-----+---+        |     +-----------------+     :
        |     |   |        |     |                 |     :
        v     v   v        v     v                 |     :
        +--------------------------+               |     :
        | Ermittlung des neuen     |               |     :
        | Statusvektors            |-----+         :
        +--------------------------+               :
                    |             \ 13             :
                    |                              :
                    v                              :
            +-----------------+                    :
            | Zuordnung zu    |                    :
            | Aktionsklassen  |                    :
            +-----------------+                    :
                    |             \ 14             :
                    |                              :
                    |-------------------------------+
                    |
                    v
    +-----------------------------------------------------+
    | Maßnahmen zur Fehlerlokalisierung, z.B.             |
    | Festlegung bzw. Aufhebung der für die Kommunikation |
    | einzuhaltenden Restriktionen.                       |
    +-----------------------------------------------------+
                                  \ 15
```

Figur 4

Start-up

```
                         Warten auf Beginn
                         einer Übertragung

                         Warten auf Ende / Abbruch
                         der Übertragung

                        / War Übertragung \
                        \    korrekt ?    /        ja

                              nein                        Stations-
                                                          überwachung
                           Stations-
                           überwachung


                       /Fehlerbehandlung\
                ja     \korrekt beendet /
                                              nein

           Stations-
           überwachnung
                       /erneuter Fehler \
                        während der                nein
                       \Fehlerbehandlung/

                              ja
                           Stations-
                           überwachung
```

Figur 5

16

Im folgenden ist ein Ausführungsbeispiel für den
Funktionsblock 'Stationsüberwachung' angegeben

```
                                           |
                                           |
                                           V
                                           |
                              _____
                             /Liegt relevante  \
          _____\   Diagnose vor  /
         |             nein     ‾‾‾‾‾‾‾|‾‾‾‾‾‾‾‾
 +---------------+  |                   ja |
 |Stations-    |  |            _____
 |überwachung|  |           / update des     \
 +------:------+  |           \Statusvektors/
                 |            ‾‾‾‾‾‾‾:‾‾‾‾‾‾‾‾
      :=         |                   |
                 |            _____
                 V           /Ist Anwendungsebene_____
                 |           \zu benachrichtigen / nein |
                 |            ‾‾‾‾‾‾‾:‾‾‾‾‾‾‾‾‾          |
                 |                   ja |                |
                 |           +-------------------+      |
                 |           |Benachrichtigung  |      |
                 |           |der Anwendungseb. |      |
                 |           +--------:----------+      |
                 |                   |                  |
                 |                   |<-----------------+
                 |                   |
                 |            _____
                 |           /   Ist Zulässigkeit von  \
                 |          |Fehlermeldungen auszuset-|-------+
                 |           \ zen/wiedereinzusetzen / nein |
                 |            ‾‾‾‾‾‾‾:‾‾‾‾‾‾‾‾‾              |
                 |                   ja |                    |
                 |           +-------------------+          |
                 |           |Aussetzung/Wiedereinset-|      |
                 |           | zung der Zulässigkeit |      |
                 |           | von  Fehlermeldungen |      |
                 |           +--------:----------+          |
                 |                   |                      |
                 |                   |<---------------------+
                 |                   |
                 |            _____
                 |           /Sind Regeln des Bus-_____
                 |           \zugangs zu verändern/ nein |
                 V            ‾‾‾‾‾‾‾:‾‾‾‾‾‾‾‾‾          |
                 |                   ja |                |
                 |           +-------------------+      |
                 |           |Veränderung der Re-|      |
                 |           |geln des Buszugangs|      |
                 |           +--------:----------+      |
                 |                   |                  |
                 |                   |<-----------------+
                 |                   |
                 |            _____
                 |           /Selbstabschaltung\
                 |           \  erforderlich   / ja  |
                 |            ‾‾‾‾‾‾‾:‾‾‾‾‾‾‾‾‾         |
                 |                nein |                |
                 |                   |       +-------------------+
                 +----------->--------|       |Selbstabschaltung|
                                     |       | veranlassen     |
                                     V       +-------------------+
                                     |       |Auf Wiederankopp-|
                                     |       | lung warten     |
                                     |       +--------:----------+
```

Figur 6